Europäisches Patentamt

European Patent Office

Office européen des brevets

(19)

(11) Numéro de publication: **0 126 011**
**B1**

(12) # FASCICULE DE BREVET EUROPÉEN

(45) Date de publication du fascicule du brevet:
**29.06.88**

(51) Int. Cl.⁴: **F 16 L 9/22,** E 02 D 29/10

(21) Numéro de dépôt: **84401003.3**

(22) Date de dépôt: **16.05.84**

(54) **Procédé d'obtention de structures creuses telles que conduits, silos ou abris.**

(30) Priorité: **17.05.83 FR 8308167**
**20.06.83 FR 8310181**
**08.02.84 FR 8401957**

(43) Date de publication de la demande:
**21.11.84 Bulletin 84/47**

(45) Mention de la délivrance du brevet:
**29.06.88 Bulletin 88/26**

(84) Etats contractants désignés:
**AT BE CH DE GB IT LI LU NL SE**

(56) Documents cité:
**EP-A-0 081 402**
**DE-B-1 191 640**
**FR-A-580 289**
**FR-A-1 597 170**

**Dr.Ing. F. LEONHARDT: "Spannbeton für die Praxis", 2ème édition, 1962, pages 530-533, Verlag von Wilhelm Ernst & Sohn, Berlin, DE; Idem.**

(73) Titulaire: **Matiere, Marcel, 17, avenue Aristide Briand, F-15000 Aurillac (FR)**

(72) Inventeur: **Matiere, Marcel, 17, avenue Aristide Briand, F-15000 Aurillac (FR)**

(74) Mandataire: **Phélip, Bruno, c/o Cabinet Harlé & Phélip 21, rue de la Rochefoucauld, F-75009 Paris (FR)**

LIBER, STOCKHOLM 1988

## Description

La présente invention concerne un nouveau moyen de mise en oeuvre du procédé d'obtention de structures creuses, telles que des conduits, silos ou abris constitués de tronçons tubulaires mis bout à bout et réalisés chacun par assemblage sur le site d'éléments préfabriqués adjacents correspondant chacun à une partie de la section transversale du conduit, lesdits tronçons tubulaires étant soumis, après assemblage, à une précontrainte au moins dans le sens longitudinal, effectuée à l'aide de cables dans le sens longitudinal.

Le document FR-A-1 597 170 décrit, par exemple, un mode de réalisation de conduites immergées constituées de tronçons tubulaires préfabriqués dont les extrémités s'emboîtent l'une dans l'autre et qui sont assemblés sur le site par des câbles de précontrainte passant dans des gaines longitudinales et mis sous tension. Chaque tronçon est en une seule pièce et il est donc difficile d'envisager la réalisation de tronçons de très grandes dimensions qui seraient intransportables sauf si, comme c'est le cas dans ce document, il s'agit de structures flottantes ou immergées.

Le document DE-B-1 191 640 décrit un procédé de réalisation d'un conduit constitué, en section transversale, d'un très grand nombre de voussoirs préfabriqués qui s'appuient les uns sur les autres et qui sont assemblés par des câbles de précontrainte tournant autour du conduit dans un plan transversal. Du fait de leur grand nombre, les éléments préfabriqués, même pour un conduit de grande dimension, restent transportables, mais la mise en place et l'assemblage des différents voussoirs est assez complexe et, les éléments étant identiques, on réalise des conduits à section circulaire.

La société déposante a déjà décrit dans la demande de brevet européen EP-A-0 081 402 un procédé d'obtention de structures creuses en forme de conduit dont la section transversale peut être très importante, par exemple supérieure à dix mètres carrés, et constituées de tronçons tubulaires juxtaposés, chaque tronçon étant réalisé par assemblage sur le site d'éléments préfabriqués adjacents correspondant chacun à une partie de la section transversale du conduit. Ces dispositions décrites dans la demande de brevet européen précédente permettent, en particulier, de réaliser des conduits de grande section dans le fond de tranchées qui sont comblées par la suite, la section transversale ayant avantageusement un profil aplati à la partie inférieure de telle sorte que chaque tronçon soit constitué d'éléments de forme différente pour réaliser, par exemple, le radier, les côtés et la voûte, ces éléments ayant cependant des dimensions telles qu'ils restent transportables.

Pour améliorer la résistance d'une telle structure creuse, une fois qu'elle a été assemblée sur le chantier, il est judicieux de la soumettre à une post-contrainte de manière à solidariser plus étroitement les différentes coquilles constituant la structure, à améliorer l'étanchéité de l'ensemble et à rendre inutiles les butées à l'endroit des coudes.

Cet assemblage par précontrainte peut se faire aussi bien dans le sens transversal, comme dans le document DE-B-1 191 640, que dans le sens longitudinal, comme dans le document FR-A-1 597 170.

Cependant, si cet assemblage par précontrainte, notamment dans le sens longitudinal, peut se faire sans trop de difficultés lorsque les éléments ne sont pas de dimensions très grandes ou bien que leur poids est diminué du fait de leur immersion, comme dans le brevet FR-A1 597 170, on a observé qu'il était pratiquement impossible d'obtenir une bonne application des tronçons les uns sur les autres pour les structures de très grandes dimensions telles que décrites dans la demande de brevet européen EP-A-0 081 402.

En effet, au moment de la pose, les tronçons tubulaires successifs ne peuvent être exactement accolés les uns contre les autres et la mise en tension des câbles de précontrainte nécessite de légers déplacements rotatifs des tronçons adjacents auxquels s'opposent les frottements exercés par le sol sur la base de chaque tronçon. Ce phénomène est amplifié par l'effet cumulatif des déplacements à produire lorsque l'on réalise en même temps l'assemblage de plusieurs tronçons juxtaposés.

L'invention a pour objet un nouveau procédé permettant de résoudre ce problème et est caractérisé en ce que, lors de l'assemblage d'une certaine longueur de structure creuse correspondant à plusieurs tronçons mis bout à bout, on dispose ces tronçons sur des supports longitudinaux destinés à empêcher le frottement du sol contre la base de la structure et à permettre un déplacement relatif des tronçons de la structure creuse par rapport auxdits supports pendant l'opération de précontrainte.

Ces supports longitudinaux ont donc pour simple rôle d'empêcher ou de réduire les frottement entre la base de la structure et le sol et ne doivent donc pas être confondus avec des semelles de fondation qui, comme décrit dans le document "Spannbeton für die praxis", cité dans le Rapport de Recherche, ont pour objet, dans un réservoir, de répartir sur le sol la poussée verticale exercée par les parois latérales.

Selon d'autres particularités de l'invention :

a) lesdits supports longitudinaux sont constitués par des masses de lestage ou d'ancrage ou par des longrines de pose,

b) après la mise en contrainte de la longueur de structure creuse, les masses de lestage ou d'ancrage ou les longrines sont fixées de façon définitive à la base de la structure, en particulier par vissage d'organes filetés à partir de l'interieur de celle-ci,

c) il est prévu entre les masses de lestage ou d'ancrage et les tronçons de la structure, des organes roulants ou glissants,

d) les organes roulants ou glissants sont constitués par des fers à béton ronds ou des feuilles glissantes métalliques ou plastiques, graissées.

D'autre part, dans certains conduits de grande dimension, avec des terrains particulièrement instables, il est apparu que les jonctions entre éléments adjacents ne permettaient pas de donner à la structure une souplesse suffisante dans le sens transversal.

On a trouvé qu'il était possible d'augmenter cette souplesse en utilisant des éléments préfabriqués qui, en section transversale, comportent au moins une partie amincie qui leur donne de la souplesse.

Si ces éléments sont en béton pourvu de fers d'armature groupés en au moins une nappe qui est continue en section transversale d'un bord à l'autre de l'élément, il est prévu une seule nappe continue en section transversale, cette nappe passant à peu près au centre de chaque partie amincie. Les parties non amincies peuvent, ou non, comporter d'autres fers d'armature.

On observera que de tels éléments ont une certaine souplesse dans le sens transversal, mais que leur rigidité dans le sens longitudinal n'est pratiquement pas affectée.

D'autres caractéristiques et avantages de l'invention seront mis en évidence dans la suite de la description, donnée à titre d'exemple non limitatif, en référence aux dessins annexés parmi lesquels :

Fig. 1 représente, en vue en perspective, une longueur de la structure creuse qui est placée sur des supports permettant sa précontrainte conformément au procédé selon l'invention, et

Fig. 2 est une vue partielle agrandie de la figure 1.

Fig. 3 est une vue en coupe et perspective d'un élément préfabriqué en béton de type classique;

Fig. 4 est une vue analogue d'un élément préfabriqué selon l'invention.

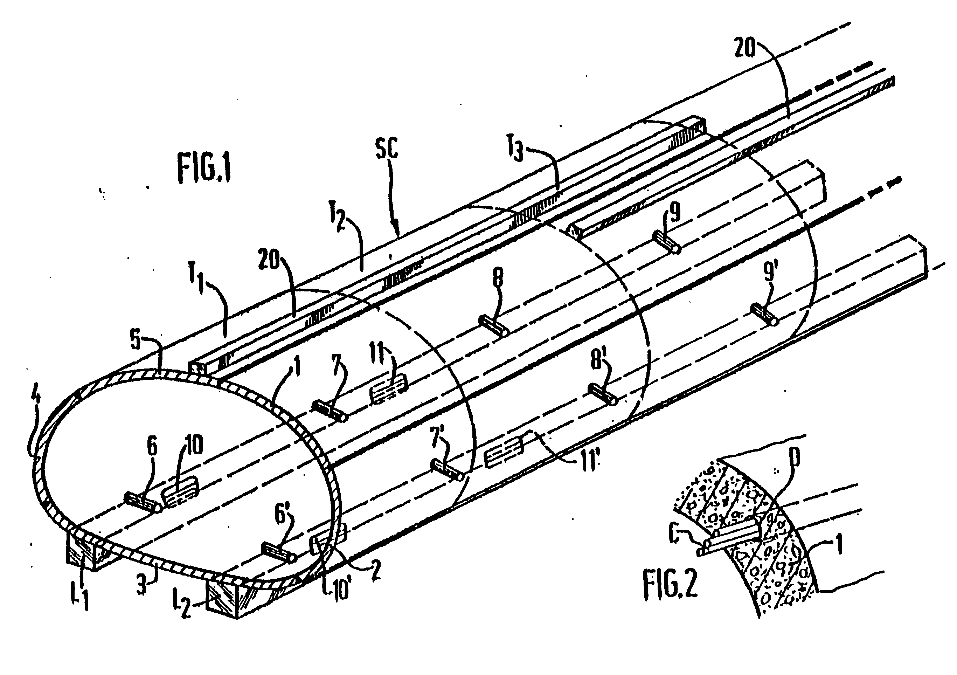

Sur la figure 1, on a représenté en vue en perspective une structure creuse de grande section, désignée dans son ensemble par SC, se composant d'une pluralité de tronçons tels que T1, T2, T3, eux-mêmes formés de plusieurs éléments préfabriqués désignés par 1, 2, 3, 4, 5 pour l'élément T$_1$.

Pour améliorer la résistance et la cohésion de la structure creuse et de ses tronçons composants, on opère selon l'invention de la façon suivante après avoir assemblé une certaine longueur de structure creuse, correspondant à plusieurs tronçons longitudinaux T1, T2, T3 etc. mis bout à bout, on soumet cette longueur de structure à une précontrainte à l'aide des câbles C placés dans des canaux D disposés longitudinalement, dans l'épaisseur des éléments, comme indiqué sur la figure 2. Il est à noter que cette sollicitation de la structure est considérée comme une précontrainte avant la mise en service et comme une postcontrainte après la mise en place. Cependant, si les tronçons étaient mis en place directement sur le sol, ils ne pourraient pas être déplacés relativement à cause du frottement exercé par le sol.

En conséquence, pour éviter que la tension des câbles ne soit rendue inefficace par le frottement du terrain, on dispose au préalable, sous la structure creuse, des supports longitudinaux, comme indiqué en L1 et L2 sur la figure. Ces supports longitudinaux peuvent être constitués par des masses de lestage ou d'ancrage.

Cependant, conformément à une autre caractéristique de l'invention, pour diminuer encore le frottement qui s'exerce entre la base de la structure creuse et les supports longitudinaux, on dispose entre ladite base et lesdits supports des organes glissants ou roulants, comme indiqué en 6,6' ; 7,7'; 8,8', 9,9'. Par exemple, on peut utiliser comme organes roulants de simples fers à béton ronds. On peut aussi prévoir d'intercaler des feuilles métalliques ou plastiques, graissées.

Les câbles de précontrainte peuvent aussi être disposés longitudinalement à l'extérieur de la structure creuse, de préférence en dehors des masses de lestage ou d'ancrage et la structure proprement dite. Il est d'ailleurs à noter que les masses de lestage ou d'ancrage peuvent être remplacées par des longrines de pose.

Après la mise en contrainte de la longueur de structure, les masses de lestage ou d'ancrage ou bien les longrines peuvent être fixées de façon définitive à la base de la structure et/ou dans le sol en particulier à l'aide d'organes filetés qui sont vissés à partir de l'intérieur de la structure. A cet effet il est prévu, dans l'exemple des réalisations, des trous 10, 11, 10', 11' de passage des organes filetés au travers de la structure, ces trous étant oblongs pour s'adapter au déplacement relatif des tronçons 71, 72, 73 .... lors de la mise en contrainte.

Dans tout ce qui précède, on a décrit l'assemblage de tronçons longitudinaux placés bout à bout et mis sous précontrainte à l'aide de câbles ou barres disposées longitudinalement. L'invention peut aussi être appliquée au cas où des structures de grande dimension formées de plusieurs éléments pour une même section transversale sont mises sous précontrainte à l'aide de câbles ou barres disposées dans un plan transversal. Dans ce cas, les éléments formant la partie inférieure de la structure présentent des surfaces horizontales de support, portées par exemple par des épaulements en saillie, et qui reposent sur des supports destinés à empêcher ou réduire le frottement sur le sol.

Les fers à béton, si on les utilise, sont alors disposés avec leur axe dirigé longitudinalement.

Si on utilise des feuilles métalliques ou plastiques, graissées elles peuvent servir à faciliter la mise en précontrainte aussi bien dans une direction que dans l'autre.

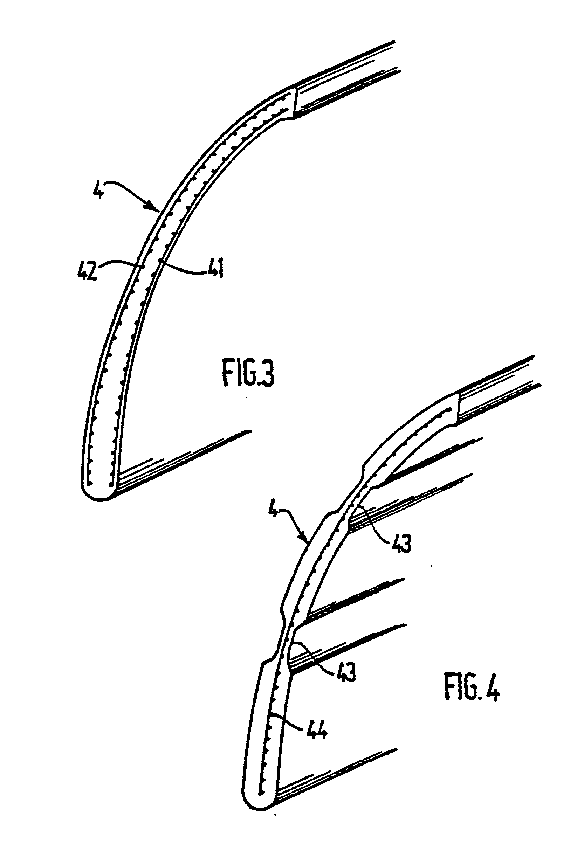

La figure 3 montre un élément préfabriqué 4 en béton armé, préparé selon la technique courante, c'est-à-dire avec deux nappes de fer d'armature 41, 42 situées respectivement au voisinage de la face intérieure et de la face extérieure de l'élément. On notera par ailleurs que les bords longitudinaux de l'élément sont aplatis ou arrondis pour permettre une jonction permettant un certain pivotement, à la façon d'une articulation, avec le radier et/ou les éléments voisins.

La figure 4 montre que l'élément 4 modifié selon l'invention comporte des parties amincies 43, qui lui donnent de la souplesse. Les fers d'armature 44 sont groupés en une seule nappe, qui passe à peu près au centre de chaque partie amincie. Les parties non amincies peuvent éventuellement comporter d'autres fers d'armature.

L'invention est bien entendu applicable lorsque les éléments sont en d'autres matériaux que le béton armé.

La figure 1 montre une structure dont l'élément inférieur 3 du tronçon T1 est constitué par un élément préfabriqué d'une seule pièce. Suivant un autre mode de réalisation, l'élément inférieur comprend deux pièces préfabriquées en forme de gouttière sur lesquelles on vient monter des éléments latéraux dont le bord inférieur se place dans la gouttière, réalisant une liaison articulée. Des traverses, qui peuvent être également des éléments préfabriqués, maintiennent les pièces en forme de gouttière en leur assurant un positionnement rigoureux. Le montage des éléments latéraux est facilité par la possibilité de pivotement de ceux-ci dans les rainures.

Les rainures et les traverses sont ultérieurement noyées dans le béton pour constituer le radier, ce qui bloque les liaisons articulées tout en procurant l'étanchéité.

Suivant une autre modalité de l'invention, on prévoit des longrines (20) qui sont solidaires chacune de plusieurs éléments longitudinaux 1, 2, 3, 4, 5 bout à bout et les solidarisant de façon à empêcher leur mouvement relatif. Ces longrines peuvent s'étendre sur toute la longueur du conduit, ou bien avoir une longueur correspondant à 3 ou 4 éléments pour permettre de petits ajustements. Les interruptions de longrines correspondent à une extrémité d'élément. Les longrines gauche et droite peuvent s'interrompre à des endroits différents. Ces longrines peuvent être en béton et coulées sur place après la mise en place d'une longueur du conduit correspondant à plusieurs éléments longitudinaux bout à bout. Si les éléments sont en métal, les longrines sont, de préférence du même métal, et mises en place par exemple par boulonnage.

**Revendications**

1. Procédé d'obtention de structures creuses telles que conduits, silos ou abris, constitués de tronçons tubulaires (T1, T2, ...) mis bout à bout et réalisés chacun par assemblage sur le site d'éléments préfabriqués adjacents (1 - 5) correspondant chacun à une partie de la section transversale du conduit, lesdits tronçons tubulaires (T1, T2, ...) étant soumis, après l'assemblage, à une précontrainte au moins dans le sens longitudinal, effectuée à l'aide de câbles (C) dans le sens longitudinal,
caractérisé en ce que, lors de l'assemblage d'une certaine longueur de structure creuse, correspondant à plusieurs tronçons (T1, T2, ...) mis bout à bout, on dispose ces tronçons sur des supports longitudinaux (L1, L2) destinés à empêcher le frottement du sol contre la base (3) de la structure et à permettre un déplacement relatif des tronçons (T1, T2, ...) de la structure creuse par rapport auxdits supports (L1, L2) pendant l'opération de précontrainte.

2. Procédé selon la revendication 1, caractérisé en ce que lesdits supports (L1, L2) sont constitués par des masses de lestage ou d'ancrage ou par des longrines de pose.

3. Procédé selon l'une des revendications 1 et 2, caractérisé en ce que, après la mise en contrainte de la longeur de structure creuse les supports (L1, L2) sont fixés de façon défintive à la base (3) de la structure, en particulier par vissage d'organes filetés à partir de l'intérieur de celle-ci.

4. Procédé selon l'une quelconque des revendications 1 à 3, caractérisé en ce qu'il est prévu entre les supports (L1, L2) et les tronçons (T1, T2, ...) de la structure des organes roulants ou glissants (6, 6' à 9, 9').

5. Procédé selon l'une quelconque des revendications 1 à 4, caractérisé en ce que les organes roulants ou glissants (6, 6' à 9, 9') sont constitués par des fers à béton ronds.

6. Procédé selon l'une quelconque des revendications 1 à 4, caractérisé en ce que les organes roulants ou glissants sont constitués par des feuilles métalliques ou en plastique, graissées.

7. Procédé selon l'une quelconque des revendications 1 à 6, caractérisé en ce que la précontrainte est appliquée longitudinalement entre tronçons successifs.

8. Procédé selon l'une des revendications 1 à 7, caractérisé en ce qu'on utilise des éléments préfabriqués (4) qui, en section transversale, comportent au moins une partie amincie (43) qui leur donne de la souplesse.

9. Procédé selon la revendication 8 et dans lequel les éléments préfabriqués (4) sont en béton pourvu de fers d'armature, groupés en au moins une nappe continue en section transversale d'un bord à l'autre de l'élément, caractérisé en ce qu'il est prévu une seule nappe continue (44) en section transversale, cette nappe (44) passant à peu près au centre de chaque partie amincie (43).

10. Procédé selon l'une des revendications 1 à 9, caractérisé en ce qu'on constitue l'élément inférieur (3) d'au moins un tronçon par deux pièces préfabriquées en forme de gouttière, sur lesquelles on vient monter des éléments latéraux (4) dont le bord inférieur se place dans la gouttière en réalisant une liaison articulée, les pièces en forme de gouttière étant maintenues par des traverses leur assurant un positionnement rigoureux, puis on constitue le radier en bloquant les gouttières et traverses dans du béton.

11. Procédé selon l'une des revendications 1 à 10, caractérisé en ce qu'on solidarise les tronçons adjacents (T1, T2, ...) dans le sens longitudinal par fixation de longrines (20).

## Patentansprüche

1. Verfahren zur Herstellung von hohlen Strukturen, wie Röhren, Silos oder Schutzräumen, die aus aneinanderliegenden röhrenförmigen Abschnitten ($T_1$, $T_2$, ...) bestehen und durch Verbinden aneinanderstoßender vorgefertigter Elemente (1 - 5) auf der Baustelle hergestellt werden, wobei jedes einem Teil des Querschnittes der Röhre entspricht und die röhrenförmigen Abschnitte (T1, T2, ...) nach der Verbindung einer Vorspannung wenigstens in Längsrichtung, die mit Hilfe von Seilen (C) in Längsrichtung bewirkt wird, unterzogen werden, dadurch gekennzeichnet, daß man während der Verbindung einer bestimmten Länge der hohlen Struktur entsprechend mehreren aneinanderliegenden Abschnitten ($T_1$, $T_2$, ...) diese Abschnitte auf Längsträgern ($L_1$, $L_2$) anordnet, die dazu bestimmt sind, die Reibung zwischen dem Boden und der Grundfläche (3) der Struktur zu verhindern und eine relative Verschiebung der Abschnitte ($T_1$, $T_2$, ...) der hohlen Struktur gegenüber den Trägern ($L_1$, $L_2$) während des Vorspannvorganges zu gestatten.

2. Verfahren nach Anspruch 1, dadurch gekennzeichnet, daß die Träger ($L_1$, $L_2$) aus Ballast- oder Verankerungsmassen oder verlegten Längsschwellen bestehen.

3. Verfahren nach einem der Ansprüche 1 und 2, dadurch gekennzeichnet, daß nach der Spannung der Länge der hohlen Sturktur die Träger ($L_1$, $L_2$) endgültig an der Grundfläche (3) oder Struktur befestigt werden, besonders durch Einschrauben von Gewindeeinrichtungen von ihrem Inneren aus.

4. Verfahren nach einem der Ansprüche 1 bis 3, dadurch gekennzeichnet, daß zwischen den Trägern ($L_1$, $L_2$) und den Abschnitten ($T_1$, $T_2$, ...) der Struktur rollende oder gleitende Einrichtungen (6, 6' bis 9, 9') vorgesehen sind.

5. Verfahren nach einem der Ansprüche 1 bis 4, dadurch gekennzeichnet, daß die rollenden oder gleitenden Einrichtungen (6, 6' bis 9, 9') aus Eisenbetonrundprofilen bestehen.

6. Verfahren nach einem der Ansprüche 1 bis 4, dadurch gekennzeichnet, daß die rollenden oder gleitenden Einrichtungen aus gleitfähigen Metall- oder Kunststoffolien bestehen.

7. Verfahren nach einem der Ansprüche 1 bis 6, dadurch gekennzeichnet, daß die Vorspannung in Längsrichtung zwischen aufeinanderfolgenden Abschnitten aufgebracht wird.

8. Verfahren nach einem der Ansprüche 1 bis 7, dadurch gekennzeichnet, daß man vorgefertigte Elemente (4) benutzt, die im Querschnitt wenigstens einen verjüngerten Teil (43) aufweisen, welcher ihnen die Geschmeidigkeit verleiht.

9. Verfahren nach Anspruch 8, in welchem die vorgeferigten Elemente (4) aus Beton bestehen, welcher mit Eisenarmierungen versehen ist, die in wenigstens einer im Querschnitt kontinuierlichen Schicht von einer Stoßkante des Elementes zu der anderen gruppiert sind, dadurch gekennzeichnet, daß eine einzige im Querschnitt kontinuierliche Schicht (44) vorgesehen ist, wobei diese Schicht (44) fast in der Mitte eines jeden verjüngerten Teil (43) verläuft.

10. Verfahren nach einem der Ansprüche 1 bis 9, dadurch gekennzeichnet, daß man das untere Element (3) wenigstens eines Abschnittes aus zwei vorgefertigten Teilen in Rinnenform bestehen läßt, auf welchen man seitliche Elemente (4) aufsteigen läßt, deren untere Stoßkante sich in einer gelenkten Verbindung in die Rinne setzt, wobei die Teile in Rinnenform durch Querbalken gehalten werden, die eine strenge Positionierung gewährleisten, und daß man dann die Sohle ausbildet, indem man die Rinnen und Querbalken in Beton verankert.

11. Verfahren nach einem der Ansprüche 1 bis 10, dadurch gekennzeichnet, daß man die aneinanderstoßenden Abschnitte ($T_1$, $T_2$, ...) in Längsrichtung durch Befestigung von Längsschwellen (20) vereinigt.

## Claims

1. Process for obtaining hollow structures, such as conduits, silos or shelters, consisting of tubular portions (T1, T2, etc) placed end to end and each produced by assembling, on site, adjacent prefabricated elements (1-5), each corresponding to part of the cross-section of the conduit, the said tubular portions (T1, T2, etc) being subjected, after assembly, to a prestress at least in the longitudinal direction, carried out by means of cables (C) in the longitudinal direction, characterized in that, during the assembly of a certain length of hollow structure corresponding to several portions (T1, T2, etc) placed end to end, these portions are arranged on longitudinal supports (L1, L2) intended to prevent the friction of the ground against the base (3) of the structure and to allow a relative movement of the portions (T1, T2, etc) of the hollow structure relative to the said supports (L1, L2) during the prestressing operation.

2. Process according to Claim 1, characterized in that the said supports (L1, L2) consist of ballasting or anchoring weights or of laying girders.

3. Process according to one of Claims 1 and 2, characterized in that, after the stressing of the length of hollow structure, the supports (L1, L2) are fastened definitively to the base (3) of the structure, especially as a result of the screwing of threaded members from the interior of the latter.

4. Process according to any one of Claims 1 to 3, characterized in that rolling or sliding members (6, 6' to 9, 9') are provided between the supports (L1, L2) and the portions (T1, T2, etc) of the structure.

5. Process according to any one of Claims 1 to 4, characterized in that the rolling or sliding members (6, 6' to 9, 9') consist of round iron reinforcing bars.

6. Process according to any one of Claims 1 to 4, characterized in that the rolling or sliding members consist of greased metal or plastic sheets.

7. Process according to any one of Claims 1 to 6, characterized in that the prestress is exerted longitudinally between successive portions.

8. Process according to any one of Claims 1 to 7, characterized in that prefabricated elements (4) which, in cross-section, have at least one thinned part (43) giving them flexibility are used.

9. Process according to Claim 8, in which the prefabricated elements (4) are made of concrete equipped with iron reinforcing bars grouped in at least one sheet of continuous cross-section from one edge of the element to the other, characterized in that there is a single sheet (44) of continuous cross-section, this sheet (44) extending approximately in the centre of each thinned part (43).

10. Process according to one of Claims 1 to 9, characterized in that the lower element (3) of at least one portion consists of two gutter-shaped prefabricated pieces, on which are mounted lateral elements (4), the lower edge of which fits into the gutter, thereby making an articulated connection, the gutter-shaped pieces being held by means of crossmembers ensuring that they are kept strictly in position, and the raft is formed by setting the gutters and crossmembers in concrete.

11. Process according to one of Claims 1 to 10, characterized in that the adjacent portions (T1, T2, etc) are fixed to one another in the longitudinal direction as a result of the fastening of girders (20).

FIG.1

FIG.2

FIG.3

FIG.4